# EUROPEAN PATENT APPLICATION

(11) **EP 4 165 973 A1**
(43) Date of publication of application: **19.04.2023**
(21) Application number: 22200552.2
(22) Date of filing: 10.10.2022
(51) Int. Cl.: A01D 34/00, A01B 69/04

(54) **WORK MANAGEMENT SYSTEM FOR WORK VEHICLE**

(30) Priority: 12.10.2021 JP 2021167214; 12.10.2021 JP 2021167695
(71) Applicant: Iseki & Co., Ltd., Matsuyama-shi, Ehime 799-2692 (JP)
(72) Inventor: MIYAUCHI, Mana, Ehime-ken, 791-2193 (JP); HATABE, Masaya, Ehime-ken, 791-2193 (JP); GOTO, Renshi, Ehime-ken, 791-2193 (JP)
(74) Representative: TBK

(57) **Abstract**

To provide a work management system for a work vehicle capable of easily performing rework of a spot where work remains even when remaining work occurs to thereby improve workability.

A work management system for a work vehicle according to an embodiment is provided with a work vehicle 10 performing work by a work machine 30 while traveling and a control device 100 controlling the work vehicle 10 to work and travel along a planned work route Rw which is previously set by using a measurement result of a positioning device 50, which includes an information terminal 120 receiving an input of information of a spot where work remains A2 at which work remains in a place where work is finished and outputting the inputted information of the spot where work remains A2 to the control device 100, in which the control device 100 creates a rework route R1 for performing rework of the inputted spot where work remains A2 by the work vehicle 10.

## Description

### BACKGROUND OF THE INVENTION

### Field of the Invention

The present invention relates to a work management system for a work vehicle.

### Description of Related Art

There has been conventionally known a technique in which a work vehicle having a work machine performing ground work such as lawn mowing performs work while traveling autonomously (hereinafter referred to as autonomous work) along a planned work route which is previously set in an area to be a work target (hereinafter referred to as a work area) (for example, refer to Patent Literature 1).

Patent Literature: JP-A-10-320045

### SUMMARY OF THE INVENTION

However, in a case where deviation occurs in data between the planned work route and a traveling track of the work vehicle in the above related-art technique, a spot where work remains (a spot where lawn grass remains unmown in a case of a lawn mower) may occur. When the spot where work remains occurs, a worker has to perform rework of the spot where work remains, for example, by hand.

An object of the present invention is to provide a work management system for a work vehicle capable of easily performing rework of the spot where work remains even when remaining work occurs to thereby improve workability.

In order to solve the above problem and to achieve the object, a work management system for a work vehicle according to the present invention is provided with a work vehicle (10) having a work machine (30) that performs ground work and performing work by the work machine (30) while traveling, a positioning device (50) measuring a self-position (P1) of the work vehicle (10), and a control device (100) controlling the work vehicle (10) to work and travel along a planned work route (Rw) which is previously set by using a measurement result of the positioning device (50), which includes an information terminal (120) receiving an input of information of a spot where work remains (A2) at which work remains in a place where work is finished and outputting the inputted information of the spot where work remains (A2) to the control device (100), in which the control device (100) creates a rework route (R1) for performing rework of the inputted spot where work remains (A2) by the work vehicle (10).

When the work management system for the work vehicle according to the present invention is adopted, rework of the spot where work remains can be easily performed even when remaining work occurs, which can improve workability.

### BRIEF DESCRIPTION OF THE DRAWINGS

Fig. 1 is a view showing the entire configuration of a work management system for a work vehicle according to a first embodiment;
Fig. 2 is a block diagram showing a control configuration of the work management system for the work vehicle according to the first embodiment;
Fig. 3 is an explanatory view for an autonomous work of the work vehicle;
Fig. 4 is an explanatory view for spots where work remains in the autonomous work of the work vehicle;
Fig. 5 is an explanatory view for a left-turn circle and a right-turn circle of the work vehicle;
Fig. 6 is an explanatory view (No. 1) for creation of a rework route;
Fig. 7 is an explanatory view (No. 2) for creation of the rework route;
Fig. 8 is an explanatory view (No. 1) for a shortest route mode;
Fig. 9 is an explanatory view (No. 2) for the shortest route mode;
Fig. 10 is an explanatory view (No. 1) for an aesthetic appearance mode;
Fig. 11 is an explanatory view (No. 2) for the aesthetic appearance mode;
Figs. 12A and 12B are explanatory views (No. 3) for the aesthetic appearance mode;
Fig. 13 is a block diagram showing a control configuration of a work management system for a work vehicle according to a second embodiment;
Fig. 14 is an explanatory view (No. 1) for detecting spots where work remains by using a camera;
Fig. 15 is an explanatory view (No. 2) for detecting spots where work remains by using the camera;
Fig. 16 is an explanatory view (No. 3) for detecting spots where work remains by using the camera;
Fig. 17 is an explanatory view (No. 1) for a display screen of rework;
Fig. 18 is an explanatory view (No. 2) for a display screen of rework; and
Fig. 19 is an explanatory view (No. 3) for a display screen of rework.

### DESCRIPTION OF EMBODIMENTS

Hereinafter, an embodiment of a work management system for a work vehicle to be disclosed by the present application will be explained in detail with reference to the attached drawings. The invention is not limited to the embodiment shown below.

### <First Embodiment>

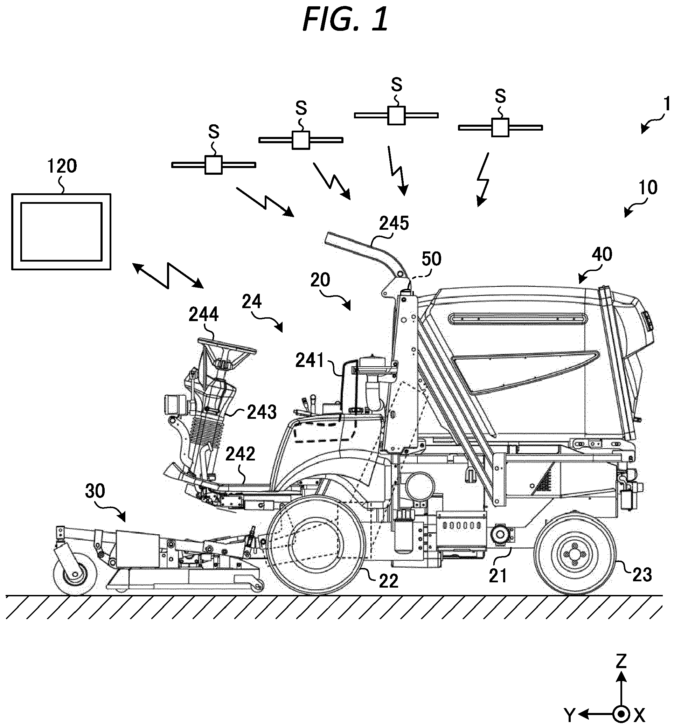

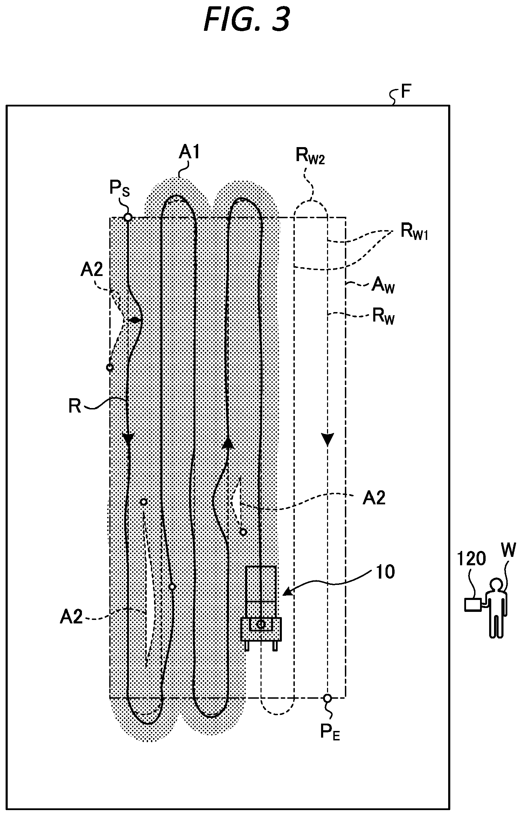

First, the entire configuration of a work management system 1 for a work vehicle according to a first embodiment will be explained with reference to Fig. 1. Fig. 1 is a view showing the entire configuration of the work management system 1 for the work vehicle according to the first embodiment. Note that a "lawn mowing work vehicle" will be explained below as an example of the work vehicle 10. The lawn mowing work vehicle 10 performs, for example, work of mowing lawn grass and the like (hereinafter referred to as lawn grass) in a predetermined work area Aw (see Fig. 3) set in a work field F (see Fig. 3) such as a dry riverbed, a park, and a stadium.

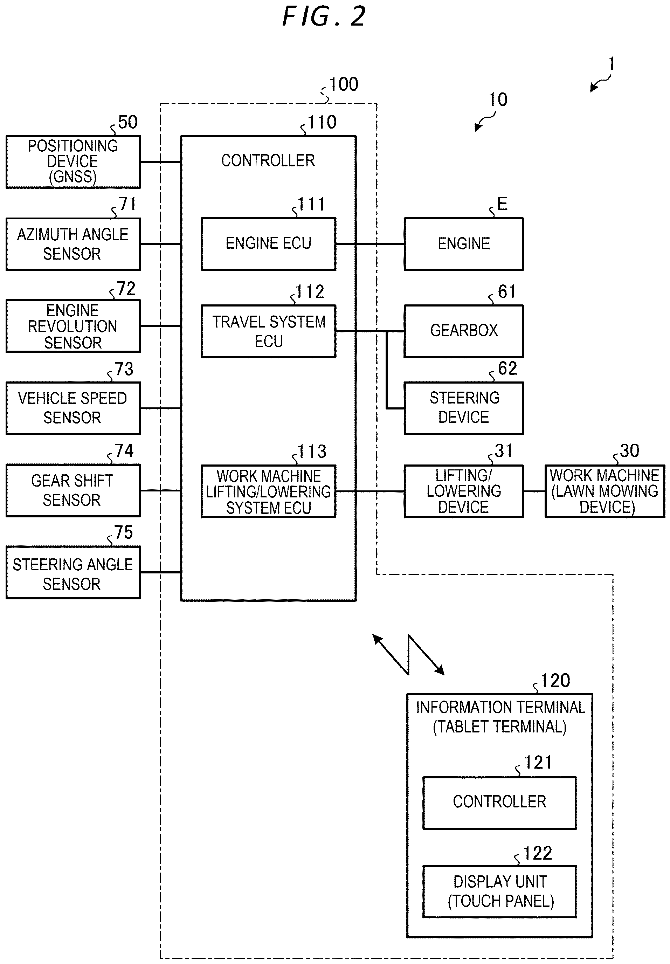

The lawn mowing work vehicle 10 also performs work while traveling in the work area Aw by the operation of an operator and performs work (autonomous work) while autonomously traveling in the work area Aw under control of respective sections by a control system mainly configured by a later-described control device 100 (see Fig. 2).

Fig. 1 shows three-dimensional rectangular coordinate system including Z-axis in which a vertically upward direction (upper direction) is a positive direction. In the following explanation, for convenience of explanation, it is prescribed that a positive direction of X-axis is a left direction, a negative direction of X-axis is a right direction, a positive direction of Y-axis is a front direction, and a negative direction of Y-axis is a rear direction. Accordingly, an X-axis direction is referred to as a right and left direction, a Y-axis direction is referred to as a front and rear direction, and a Z-axis direction is referred to as a vertical direction in the following explanation. Such three-dimensional rectangular coordinate system may be shown in other drawings.

As shown in Fig. 1, the work management system 1 includes the lawn mowing work vehicle 10, a positioning device 50, the control device 100 (see Fig. 2), and an information terminal 120.

The lawn mowing work vehicle 10 is operated by an operator seated on a driver's seat 241 arranged in a later-described traveling vehicle body 20. Note that the lawn mowing work vehicle 10 may be referred to as a "machine body". The lawn mowing work vehicle 10 is provided with the traveling vehicle body 20, a lawn mowing device 30 which is a work machine performing ground work, and a grass collecting container (hereinafter referred to as a collector) 40.

The traveling vehicle body 20 includes a vehicle body frame 21, a right-and-left pair of front wheels 22, and a right-and-left pair of rear wheels 23. The traveling vehicle body 20 also has an operation unit 24 at a front part thereof. The operation unit 24 includes the driver's seat 241, a floor step 242, a steering column 243, and a steering wheel 244 which is an operation tool for steering.

An arch-shaped safety bar 245 in a front view of the machine body is provided at the rear of the operation unit 24 so as to be tilted in the front and rear direction.

The lawn mowing device (also referred to as a mower device) 30 is installed at a front lower part of the traveling vehicle body 20. The lawn mowing device 30 is provided with a cutting blade (not shown) rotating about a vertical axis extending along the vertical direction to cut lawn grass and a motor (not shown) driving the cutting blade. The lawn mowing device 30 is provided so as to be lifted and lowered through a lifting/lowering device 31 (see Fig. 2). The lawn mowing device 30 may be a type of device arranged between the front wheels 22 and the rear wheels 23 at a lower part of the traveling vehicle body 20.

The collector 40 accommodates lawn grass mowed by the lawn mowing device 30 and is provided so as to be lifted and lowered through a collector lifting/lowering mechanism.

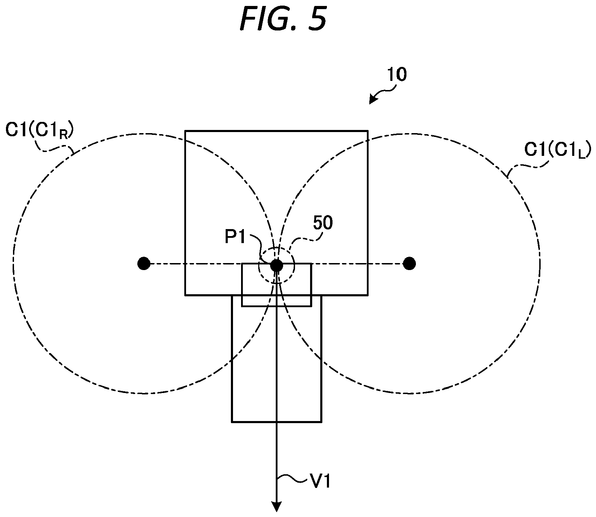

The positioning device 50 is provided at an upper part of the traveling vehicle body 20, measuring the position of the traveling vehicle body 20 in predetermined cycles and acquiring information (for example, latitude and longitude) of a self-position P1 (see Fig. 5) of the traveling vehicle body 20. The positioning device 50 is, for example, GNSS (Global Navigation Satellite System), which can receive radio waves from a navigation satellite S orbiting in the sky to determine the self-position P1 of the traveling vehicle body 20 (lawn mowing work vehicle 10) and to measure time.

The control device 100 (see Fig. 2) is configured by including a controller 110 (see Fig. 2) mounted on the lawn mowing work vehicle 10 and the later-described information terminal 120. The control device 100 may be configured by including any one of the controller 110 and the information terminal 120. For example, when the control device 100 is configured by the controller 110 of the lawn mowing work vehicle 10 alone, processing performed by the information terminal 120 to be explained below will be performed also by the controller 110.

The information terminal 120 is, for example, a tablet terminal which can be carried by a work manager W (see Fig. 3). The information terminal 120 can be connected to a communication network such as Internet, and can connected with a work management device (not shown) through the communication network. In this case, the work management device is a system which can realize so-called cloud computing. The information terminal 120 and the work management device are connected through, for example, a wireless LAN (Local Area Network).

The information terminal 120 includes a controller (storage unit) 121 (see Fig. 2) configured by, for example, a hard disc, a ROM (Read Only Memory), a RAM (Random Access Memory), and the like, and a display unit 122 (see Fig. 2) configured by a touch panel and functioning also as an operation unit. The information terminal 120 may be provided with various keys, buttons, and the like as the operation unit. The information terminal 120 may also be provided with a processing unit having a CPU (Central Processing Unit) and the like so as to control respective units by electronic control.

The work management device is a processing device having the CPU and the like, a storage device such as the ROM, the RAM, an HDD (Hard Disk Drive), or a computer provided with an input/output device.

The lawn mowing work vehicle 10 can set the lawn mowing work at the specific work field F by the operation of the information terminal 120 by the work manager W.

Next, the work management system 1 for the work vehicle according to the first embodiment, namely, a control system of the lawn mowing work vehicle 10 mainly operated by the control device 100 will be explained with reference to Fig. 2. Fig. 2 is a block diagram showing a control configuration of the work management system 1 for the work vehicle according to the first embodiment. As shown in Fig. 2, the control device 100 is configured by including the controller 110 of the lawn mowing work vehicle 10 and the information terminal 120.

The controller 110 includes an engine ECU (Electronic Control Unit) 111, a travel system ECU 112, and a work machine lifting/lowering system ECU 113.

The engine ECU 111 controls the number of revolutions of an engine E. The travel system ECU 112 controls the travel speed of the traveling vehicle body 20 (see Fig. 1), for example, by controlling the revolution of the rear wheels 23 (see Fig. 1) which are drive wheels. The work machine lifting/lowering system ECU 113 controls the lifting/lowering device 31 and drives the lawn mowing device 30 which is the work machine to be lifted/lowered.

The controller 110 includes a processing unit capable of controlling respective units by electronic control and having the CPU, and a storage unit configured by the hard disk, the ROM, the RAM, and the like and storing various programs and necessary data such as a later-described planned work route R_{W} (see Fig. 3) of the traveling vehicle body 20 which is previously set for each field.

As shown in Fig. 2, the positioning device (GNSS) 50, an azimuth angle sensor 71, an engine revolution sensor 72, a vehicle speed sensor 73, a gear shift sensor 74, a steering angle sensor 75, and the like are connected to the controller 110. In addition, the engine E, a gearbox 61, a steering device 62, the lifting/lowering device 31, and the like are connected to the controller 110.

The azimuth angle sensor 71 detects an absolute azimuth angle in a traveling direction of the traveling vehicle body 20 (for example, "north" is 0° (360°), "east" is 90°, "south" is 180°, and "west" is 270°). The azimuth angle sensor 71 detects the absolute azimuth angle at fixed intervals, and transmits the detected absolute azimuth angle to the controller 110 and the like.

The engine revolution sensor 72 detects the number of revolutions of the engine E. The vehicle speed sensor 73 detects the travel speed (vehicle speed) of the traveling vehicle body 20. The gear shift sensor 74 detects which of a plurality of gear shift stages the gearbox 61 is in. The steering angle sensor 75 detects a steering angle of the front wheels 22 (see Fig. 1) which are steering wheels.

Information of the position (self-position) P1 of the traveling vehicle body 20 in the work field F (see Fig. 3) from the positioning device 50, the absolute azimuth angle of the traveling vehicle body 20 from the azimuth angle sensor 71, the number of revolutions of the engine E from the engine revolution sensor 72, the vehicle speed of the traveling vehicle body 20 from the vehicle speed sensor 73, the current gear shift stage from the gear shift sensor 74, and the steering angle of the front wheels 22 from the steering angle sensor 75 are respectively inputted to the controller 110.

The controller 110, when the traveling vehicle body 20 is made to autonomously travel (autonomous work), controls a steering cylinder connected to the steering wheel 244 (see Fig. 1) while feeding back the steering angle of the front wheels 22 by using the detected value of the steering angle sensor 75, thereby performing steering control of the steering wheel 244.

In the controller 110, the engine ECU 111 is connected to the engine E, the travel system ECU 112 is connected to the gearbox 61 and the steering device 62, and the work machine lifting/lowering system ECU 113 is connected to the lifting/lowering device 31. The work machine lifting/lowering system ECU 113 lifts and lowers the lawn mowing device 30 through the lifting/lowering device 31.

Moreover, when the traveling vehicle body 20 is made to autonomously travel (autonomous work) in the controller 110, the planned work route Rw corresponding to the work contents (lawn mowing work) by the lawn mowing device 30 is determined in advance for each work field F and stored in the storage unit in a data format.

The controller 110 controls the engine E, the gearbox 61, the steering device 62, the lifting/lowering device 31, and the like to perform work while traveling along the planned work route R_{W} stored in the storage unit on the basis of the measurement result by the positioning device 50. The planned work route Rw is set according to the shape or the size of the work field F. The controller 110 also sets a turning radius to be used when the lawn mowing work vehicle 10 (traveling vehicle body 20) moves.

Furthermore, the controller 110 is wireless-connected to, for example, the information terminal 120 which can be carried by the work manager W (see Fig. 3) as described above. The controller 110 controls respective units of the lawn mowing work vehicle 10 on the basis of an instruction signal from the information terminal 120 by the operation of the work manager W. The controller 110 may be configured to have a machine-body information database of the lawn mowing work vehicle 10 so that delivery of information such as a model can be performed by the information terminal 120 and the like.

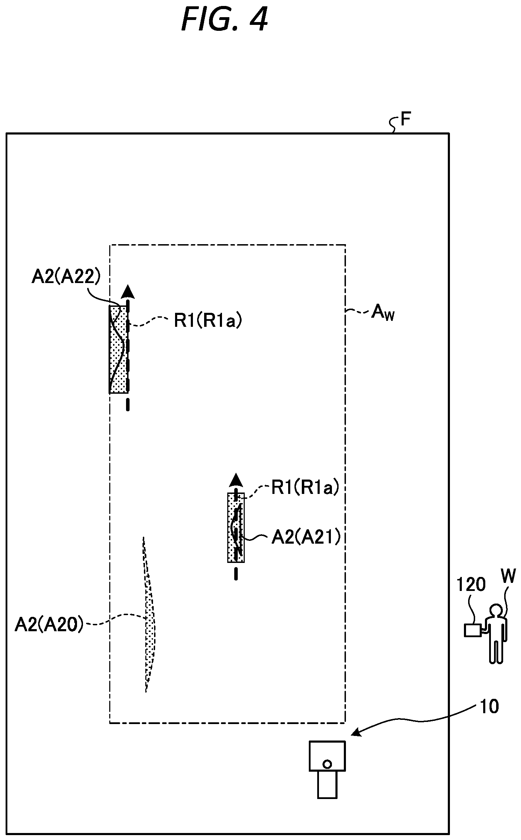

Next, the autonomous work of the work vehicle (lawn mowing work vehicle 10) will be explained with reference to Fig. 3 and Fig. 4. Fig. 3 is an explanatory view for the autonomous work of the work vehicle (lawn mowing work vehicle 10). Fig. 4 is an explanatory view for spots where work remains in the autonomous work of the work vehicle (lawn mowing work vehicle 10). The work field F seen from above is schematically shown in Fig. 3 and Fig. 4.

For example, in the case of the lawn mowing work vehicle 10 which performs the autonomous work in response to the operation of the information terminal 120 by the work manager W, the control device 100 (see Fig. 2) creates the planned work route Rw in which an adequate turning position, an adequate mowing height of lawn grass, and the like are prescribed on the basis of information including the entire length, the entire width, a tread of the lawn mowing work vehicle 10, ability of the lawn mowing device 30 (see Fig. 1), the shape or the area of the work field F, and the like.

The lawn mowing work vehicle 10 performs the lawn mowing work, for example, by repeating direct advance and turning along the planned work route Rw from a work start point P_{S} to a work end point P_{E} which are previously set in the work area A_{W} set in the work field F.

The planned work route R_{W} has direct advance routes R_{W1} and a turning route R_{W2}. The direct advance routes R_{W1} are routes which are set in the work area A_{W} of the lawn mowing work vehicle 10, in which a lawn mowing process (direct advance process) is performed while the lawn mowing work vehicle 10 advances straight. The turning route R_{W2} is a route connecting ends of adjacent direct advance routes R_{W1} to each other, which is the route in which a turning process for moving the lawn mowing work vehicle 10 from the direct advance route R_{W1} to the next direct advance route R_{W1} is performed.

Here, for example, in a case where an actual travel route R of the lawn mowing work vehicle 10 is deviated from the planned work route R_{W} due to occurrence of deviation in data between the planned work route R_{W} and a traveling track of the lawn mowing work vehicle 10 as shown in Fig. 3, there may be a case where a spot where work remains (spot where lawn grass remains unmown) A2 to be an uncompleted work area separately from a completed work area A1 in a place (area) where lawn mowing work has been finished.

In the case where the spots where work remains A2 (A21, A22) occur as shown in Fig. 4, a later-described rework route R1 for performing rework of the spots where work remains A21, A22 is created, and the lawn mowing work vehicle 10 performs autonomous work for the rework on the basis of the created rework route R1. Note that an area A20 in the spots where work remains A2 shown in Fig. 4 is an area not determined to be the spot where work remains A2 by the work manager W. It is possible to determine the spot where work remains A2 by visual observation of the work manager W.

It is also preferable that, when the work manager W recognizes the spot where work remains A2, for example, a screen for designating a position and an area of the spot where work remains A2 in the work field F by the work manager W by surrounding the spot by a square (rectangle) may be displayed on the display unit 122 (see Fig. 2) of the information terminal 120 as shown in Fig. 4.

It is further preferable that a screen for confirming whether rework is started or not after work by the lawn mowing work vehicle 10 is finished is displayed on the display unit 122 of the information terminal 120.

As shown in Fig. 3 and Fig. 4, the spots where work remains A2 are uncompleted work areas where the completed work area A1 is closed at an edge part of the work area Aw or closed between the completed work areas A1 adjacent to each other. Whether the area corresponds to the spot where work remains A2 or not is made by, for example, visual observation by the work manager W.

The rework route R1 is a route for the lawn mowing work vehicle 10 automatically performing rework of the spot where work remains A2 after work is finished along the planned work route Rw. When the rework route R1 is created, the information terminal 120 receives an input operation of information for the spot where work remains A2 (hereinafter referred to as information for the spot where work remains) and an operation of designating the spot where work remains A2 by the work manager W from the display unit 122 (see Fig. 2). The information terminal 120 outputs the inputted information for the spot where work remains and the designated spot where work remains A2 to the control device 100.

Then, the control device 100 creates the rework route R1 on the basis of the information for the spot where work remains and the designated spot where work remains A2 from the information terminal 120. An actual work route R1a along which ground work (lawn mowing work) is actually performed in the rework route R1 is set to be longer than the spot where work remains A2 in the traveling direction of the lawn mowing work vehicle 10 in a later-described shortest route mode. In a later-described aesthetic appearance mode, the actual work route R1a is set as the entire direct advance route R_{W1} having the spot where work remains A2.

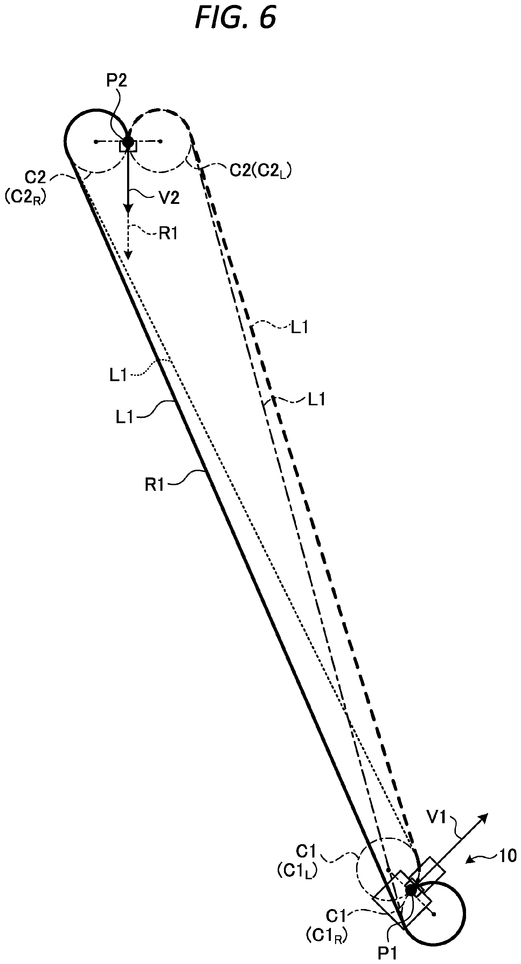

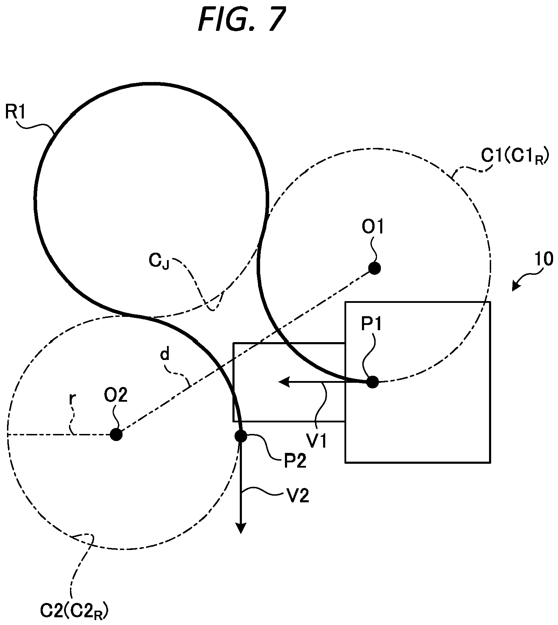

Next, processing of creating the rework route (R1) by the control device 100 will be explained with reference to Fig. 5 to Fig. 7. Fig. 5 is an explanatory view for a left-turn circle and a right-turn circle of the work vehicle (lawn-mowing work vehicle 10). The lawn mowing work vehicle 10 seen from above is schematically shown in Fig. 5. Fig. 6 and Fig. 7 are explanatory views for creation of the rework route (R1). Fig. 6 schematically shows an example of a movement track of the lawn mowing work vehicle 10 seen from above to a rework start point P2, and Fig. 7 schematically shows another example of the movement track of the lawn mowing work vehicle 10 seen from above to the rework start point P2.

As described above, the control device 100 (see Fig. 2) creates the rework route R1 of the lawn mowing work vehicle 10 so as to move to the rework start point P2 through an adequate route when the lawn mowing work vehicle 10 performs rework.

As shown in Fig. 5, the control device 100 previously sets circles C1 having turning radiuses with which the circles contact each other at a vector V1 of an azimuth angle acquired by the azimuth angle sensor 71 (see Fig. 2) and the current position (self-position P1) acquired by the positioning device 50. That is, the control device 100 sets a first right-turn circle C1_{R} and a first left-turn circle C1_{L} to be turning tracks to be used when the lawn mowing work vehicle 10 starts while turning on the basis of the current position (self-position P1) of the lawn mowing work vehicle 10 and an orientation thereof.

As shown in Fig. 6, the control device 100 sets circles C2 having turning radiuses with which the circles contact each other at a vector V2 in the rework route R1 and the rework start point P2. That is, the control device 100 sets a second right-turn circle C2_{R} and a second left-turn circle C2_{L} to be turning tracks used when the lawn mowing work vehicle 10 enters the rework start point P2 in the spot where work remains A2 at which the lawn mowing work vehicle 10 performs rework first.

The control device 100 also sets tangent lines L1 with respect to the circles C1, C2 with two turning radiuses. Then, the control device 100 creates a plurality of routes on the basis of the circles C1, C2 with two turning radiuses and the tangent lines L1, setting the route to be the shortest as the rework route R1 from the plural routes. As described above, the control device 100 selects the route from four patterns of routes including a pattern of right-turn, direct advance, and right-turn, a pattern of right-turn, direct advance, and left-turn, a pattern of left-turn, direct advance, and right-turn, and a pattern of left-turn, direct advance, and left-turn when setting the shortest route (a later-described rework route R11).

When a distance from the current position (self-position P1) of the lawn mowing work vehicle 10 to the rework start point P2 is short, for example, when a distance d from a center O1 of the first right-turn circle C1_{R} to a center O2 of the second right-turn circle C2_{R} is four times or less of the turning radius r, the control device 100 further sets a connection circle C_{J} having a turning radius for contacting the circles C1, C2 having two turning radiuses. Then, the control device 100 creates a route to be the shortest from the circles C1, C2, and C_{J} with three turning radiuses. As described above, the control device 100 selects the route from six-patterns of routes obtained by adding two patterns which are a pattern of right-turn, left-turn, and right turn, and a pattern of left-turn, right-turn, and left-turn when setting the shortest route (the later-described rework route R11).

The control device 100 has the shortest route mode and the aesthetic appearance mode in creation of the rework route R1. The control device 100 executes either of the shortest route mode and the aesthetic appearance mode when creating the rework route R1. A screen for selecting in which mode of the shortest route mode and the aesthetic appearance mode the work manager W performs rework when performing the rework is displayed on the display unit 122 (see Fig. 2) of the information terminal 120.

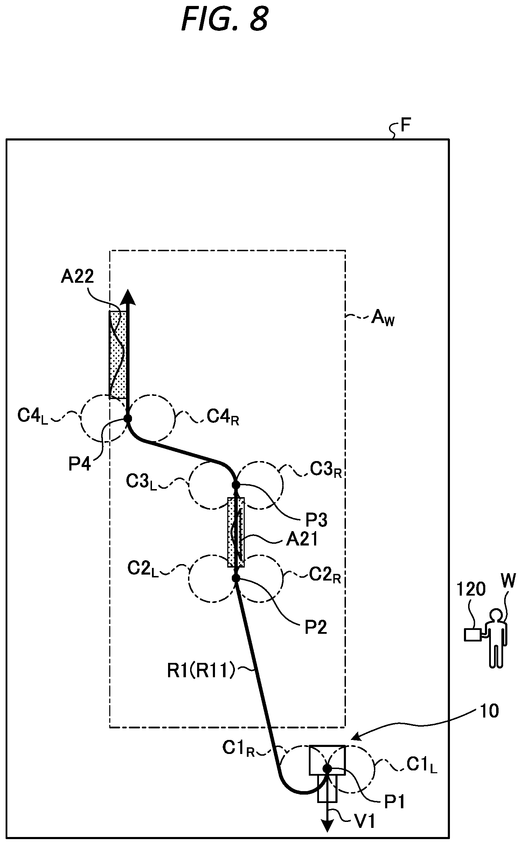

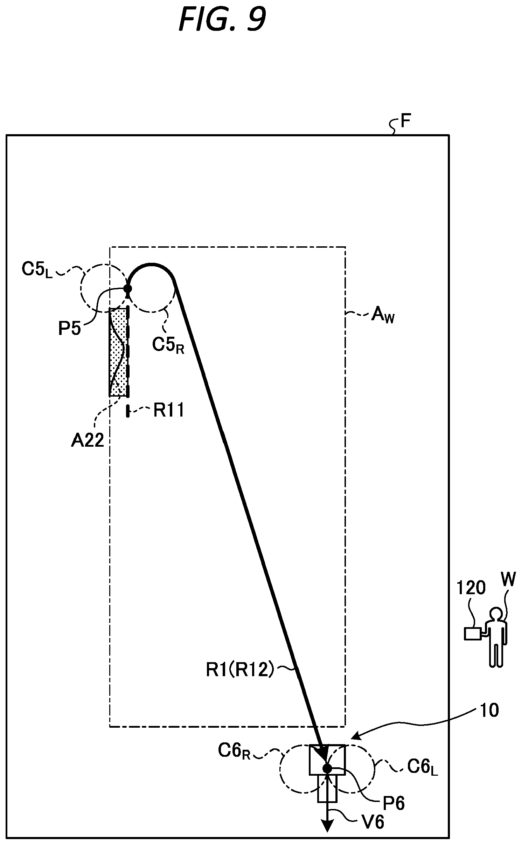

Next, the shortest route mode will be explained with reference to Fig. 8 and Fig. 9. Fig. 8 and Fig. 9 are explanatory views for the shortest route mode. Fig. 8 and Fig. 9 schematically show the work field F which is seen from above. The rework route R11 in the shortest route mode is shown in Fig. 8, and a movement route after rework is finished (movement route after finish) R12 in the shortest route mode is shown in Fig. 9.

As described above, the control device 100 (see Fig. 2) has the shortest route mode in which the current position (self-position P1) of the lawn mowing work vehicle 10 is connected to the spot where work remains A2 in the shortest route. In the shortest route mode, the rework of the spot where work remains A2 can be performed in the shortest route.

As shown in Fig. 8, the control device 100 sets the first right-turn circle C1_{R} and the first left-turn circle C1_{L} to be turning tracks used when the lawn mowing work vehicle 10 starts while turning. Next, the control device 100 sets the second right-turn circle C2_{R} and the second left-turn circle C2_{L} to be turning tracks used when the lawn mowing work vehicle 10 enters the rework start point P2 in the spot where work remains A21 at which the lawn mowing work vehicle 10 performs rework first.

Next, the control device 100 controls the lawn mowing work vehicle 10 to move the rework route R11 created by the tangent lines L1 on the first right-turn circle C1_{R} or the first left-turn circle C1_{L} and the second right-turn circle C2_{R} or the second left-turn circle C2_{L}, and on the first right-turn circle C1_{R} or the first left-turn circle C1_{L} and the second right-turn circle C2_{R} or second left-turn circle C2_{L} (see Fig. 6), and to rework the spot where work remains A21 along the rework route R11.

Next, the control device 100 sets a third right-turn circle C3_{R} and a third left-turn circle C3_{L} to be turning tracks used when the lawn mowing work vehicle 10 turns from a rework finish point P3 in the spot where work remains A21 at which the lawn mowing work vehicle 10 performs rework first. Next, the control device 100 sets a fourth right-turn circle C4_{R} and a fourth left-turn circle C4_{L} to be turning tracks used when the lawn mowing work vehicle 10 enters a rework start point P4 in the spot where work remains A22 at which the lawn mowing work vehicle 10 performs rework next.

Subsequently, the control device 100 controls the lawn mowing work vehicle 10 to move the rework route R11 created by the tangent lines L1 on the third right-turn circle C3_{R} or the third left-turn circle C3_{L} and the fourth right-turn circle C4_{R} or the fourth left-turn circle C4_{L}, and on the third right-turn circle C3_{R} or the third left-turn circle C3_{L} and the fourth right-turn circle C4_{R} or the fourth left-turn circle C4_{L}, and to rework the spot where work remains A22 along the rework route R11.

That is, in the shortest route mode, the control device 100 controls the lawn mowing work vehicle 10 to move from the self-position P1 to the rework start point P2 in the spot where work remains A21 in the shortest route, and to rework the spot where work remains A21 when there are plural spots where work remains A2 (A21, A22). Next, the control device 100 controls the lawn mowing work vehicle 10 to move from the rework finish point P3 in the spot where work remains A21 to the rework start point P4 in the spot where work remains A22 in the shortest route, and to rework the spot where work remains A22.

When there are plural spots where work remains A2 (A21, A22), the control device 100 also allows the information terminal 120 to display a screen for designating the order of the spots where work remains A21 and A22 to be reworked and allows the information terminal 120 to display a screen for designating a work direction for each of the spots where work remains A21 and A22 in the shortest route mode.

As described above, the control device 100 prompts the work manager W to designate the order of the spots where work remains A21 and A22 at which rework is performed and the work direction for each of the spots where work remains A21 and A22 through the information terminal 120. When the order and the work direction are designated by the work manager W, the control device 100 creates the shortest route (rework route R11) on the basis of the designated order and the work direction.

Moreover, the control device 100 previously sets a waiting position after finish P6 to which the lawn mowing work vehicle 10 is moved after the rework is finished by the lawn mowing work vehicle 10 in the shortest route mode. In the shortest route mode, the lawn mowing work vehicle 10 moves from a rework finish point P5 in the spot where work remains A2 at which rework is performed last (the spot where work remains A22 in the shown example) to the waiting position after finish P6 along a movement route after finish R12 to be the shortest route.

As shown in Fig. 9, the control device 100 sets a fifth right-turn circle C5_{R} and a fifth left-turn circle C5_{L} to be turning tracks used when the lawn mowing work vehicle 10 turns from the rework finish point P5 in the spot where work remains A22 at which rework is performed last in the shortest route mode. Next, the control device 100 creates the movement route after finish R12 by allowing a tangent line of the fifth right-turn circle C5_{R} or the fifth left-turn circle C5_{L} to reach the waiting position after finish P6. Then, the control device 100 controls the lawn mowing work vehicle 10 to move the movement route after finish R12 and to reach the waiting position after finish P6.

The control device 100 may also set a sixth right-turn circle C6_{R} and a sixth left-turn circle C6_{L} contacting each other at the waiting position after finish P6 with respect to a vector V6 in a direction (azimuth angle) of the lawn mowing work vehicle 10 at the waiting position after finish P6 in the shortest route mode as shown in Fig. 9. In this case, the control device 100 controls the lawn mowing work vehicle 10 to move the movement route after finish R12 created by tangent lines on the fifth right-turn circle C5_{R} or the fifth left-turn circle C5_{L} and the sixth right-turn circle C6_{R} or the sixth left-turn circle C6_{L}, and on the fifth right-turn circle C5_{R} or the fifth left-turn circle C5_{L} and the sixth right-turn circle C6_{R} or sixth left-turn circle C6_{L}.

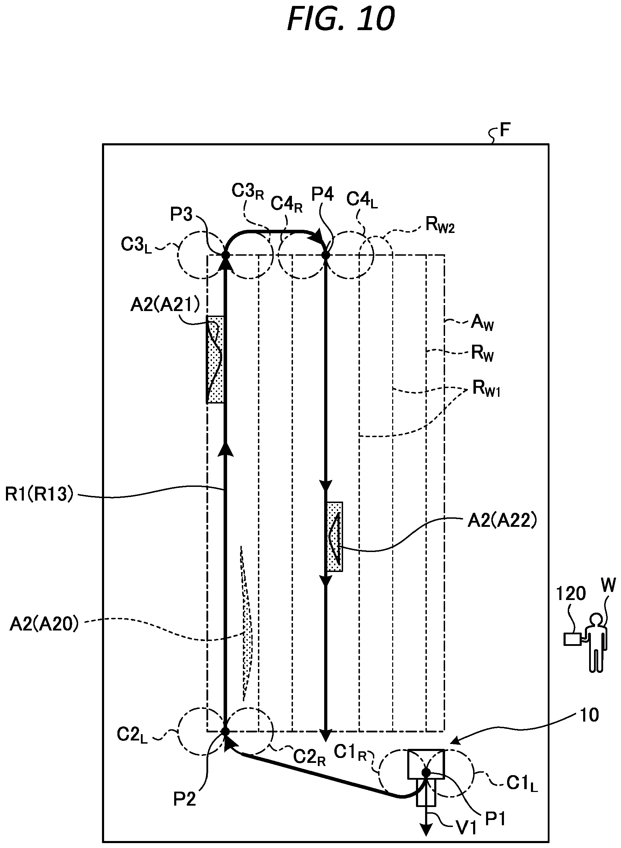

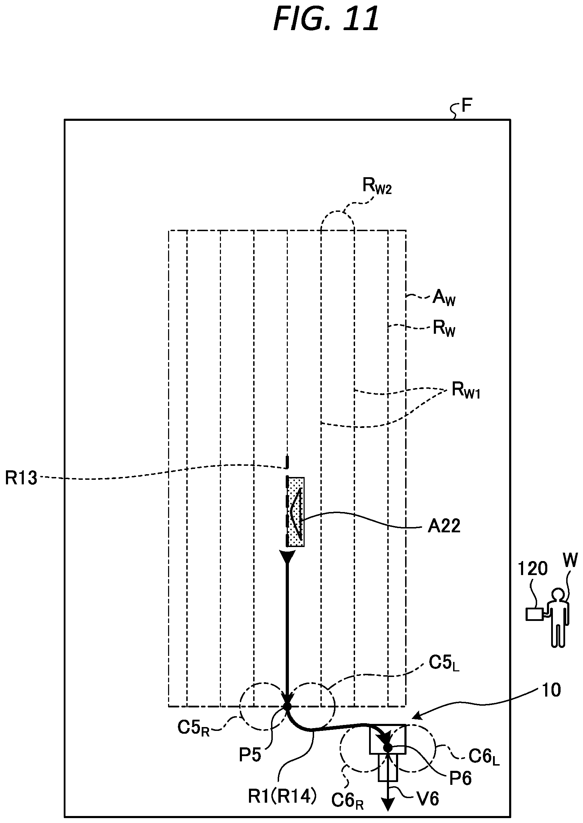

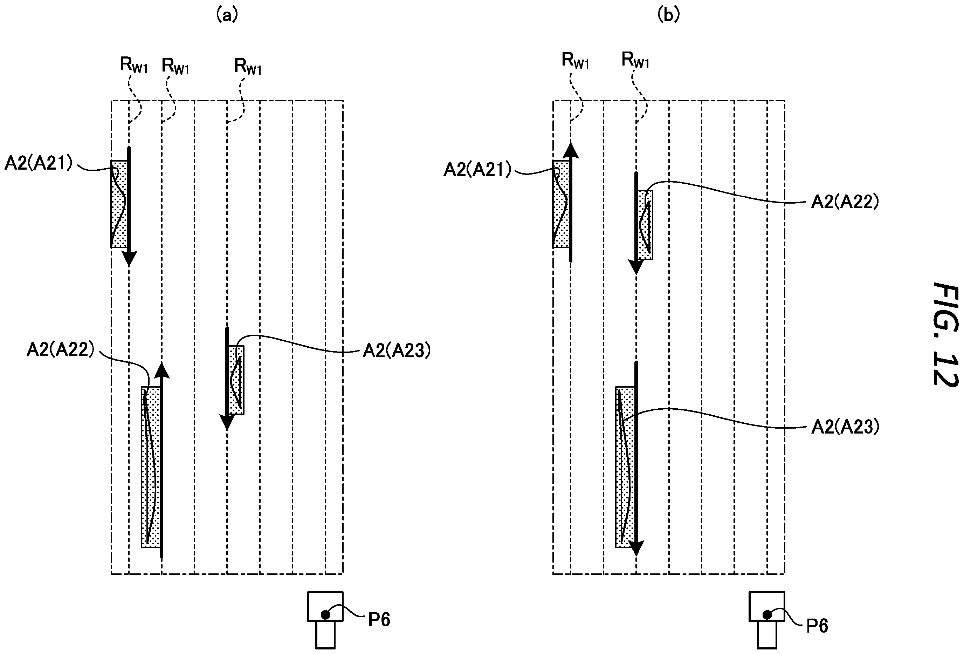

Next, the aesthetic appearance mode will be explained with reference to Fig. 10 to Fig. 12. Fig. 10 to Fig. 12 are explanatory views for the aesthetic appearance mode. Fig. 10 to Fig. 12 schematically show the work field F seen from above. Fig. 10 shows a rework route R13 in the aesthetic appearance mode, Fig. 11 shows a movement route (movement route after finish) R14 used when rework is finished in the aesthetic appearance mode, Fig. 12A shows a case where the number of direct advance routes R_{W1} having spots where work remains A2 is an odd number, and Fig. 12B shows a case where the number of direct advance routes R_{W1} having the spots where work remains A2 is an even number.

The control device 100 (see Fig. 2) has the aesthetic appearance mode suitable for reworking the spots where work remains A2 in the work field F in which appearance is also considered to be important such as a park, a stadium, and a golf course when creating the rework route R1. In the aesthetic appearance mode, the rework of the spots where work remains A2 can be performed so as to be finished more beautifully.

As shown in Fig. 10, when creating the rework route R13 in the aesthetic appearance mode, the control device 100 creates the rework route R13 so as to be a route through which the vehicle travels for performing work of the designated spots where work remains A2 (A21, A22) along the direct advance route R_{W1} and so as not to cross the direct advance route R_{W1}.

The control device 100 performs work in the shortest route mode also in the aesthetic appearance mode. That is, the control device 100 performs rework of the spots where work remains A2 in the shortest route while performing the rework so as to be finished more beautifully in the aesthetic appearance mode.

As shown in Fig. 10, the control device 100 sets the first right-turn circle C1_{R} and the first left-turn circle C1_{L} to be turning tracks used when the lawn mowing work vehicle 10 starts while turning in the aesthetic appearance mode. Next, the control device 100 sets the second right-turn circle C2_{R} and the second left-turn circle C2_{L} to be turning tracks used when the lawn mowing work vehicle 10 enters an entry end (rework start point P2) of the direct advance route R_{W1} having the spot where work remains A21 at which the lawn mowing work vehicle 10 performs rework first.

Subsequently, the control device 100 controls the lawn mowing work vehicle 10 to move the rework route R13 created by the tangent lines L1 on the first right-turn circle C1_{R} or the first left-turn circle C1_{L} and the second right-turn circle C2_{R} or the second left-turn circle C2_{L}, and on the first right-turn circle C1_{R} or the first left-turn circle C1_{L} and the second right-turn circle C2_{R} or second left-turn circle C2_{L} (see Fig. 6), and to rework the spot where work remains A21 along the rework route R13.

Next, the control device 100 sets the third right-turn circle C3_{R} and the third left-turn circle C3_{L} to be turning tracks used when the lawn mowing work vehicle 10 turns from an exit end (rework finish point P3) of the direct advance route R_{W1} having the spot where work remains A21 at which the lawn mowing work vehicle 10 performs rework first. Next, the control device 100 sets the fourth right-turn circle C4_{R} and the fourth left-turn circle C4_{L} to be turning tracks used when the lawn mowing work vehicle 10 enters an entry end (rework start point P4) of the direct advance route R_{W1} having the spot where work remains A22 at which the lawn mowing work vehicle 10 performs rework next.

Subsequently, the control device 100 controls the lawn mowing work vehicle 10 to move the rework route R13 created by tangent lines on the third right-turn circle C3_{R} or the third left-turn circle C3_{L} and the fourth right-turn circle C4_{R} or the fourth left-turn circle C4_{L}, and on the third right-turn circle C3_{R} or the third left-turn circle C3_{L} and the fourth right-turn circle C4_{R} or the fourth left-turn circle C4_{L}, and to rework the spot where work remains A22 along the rework route R13.

That is, in the aesthetic appearance mode, the control device 100 controls the lawn mowing work vehicle 10 to move from the self-position P1 to the entry end (rework start point P2) of the direct advance route R_{W1} having the spot where work remains A21 in the shortest route when there are plural spots where work remains A2 (A21, A22), and to rework the spot where work remains A21 along the direct advance route R_{W1}. Next, the control device 100 controls the lawn mowing work vehicle 10 to move from the rework finish point P3 to the entry end (rework start point P4) of the direct advance route R_{W1} having the spot where work remains A22 in the shortest route, and to rework the spot where work remains A22 along the direct advance route R_{W1}.

Moreover, the control device 100 previously sets the waiting position after finish P6 to which the lawn mowing work vehicle 10 is moved after the rework is finished by the lawn mowing work vehicle 10 in the aesthetic appearance mode. In the aesthetic appearance mode, the lawn mowing work vehicle 10 moves from an exit end (rework finish point P5) of the direct advance route R_{W1} having the spot where work remains A2 (spot where work remains A22) at which rework is performed last to the waiting position after finish P6 along the movement route after finish R14 to be the shortest route in the same manner as the shortest route mode.

As shown in Fig. 11, the control device 100 sets the fifth right-turn circle C5_{R} and the fifth left-turn circle C5_{L} to be turning tracks used when the lawn mowing work vehicle 10 turns from the exit end (rework finish point P5) of the direct advance route R_{W1} having the spot where work remains A22 at which rework is performed last in the aesthetic appearance mode. Next, the control device 100 creates the movement route after finish R14 by allowing a tangent line of the fifth right-turn circle C5_{R} or the fifth left-turn circle C5_{L} to reach the waiting position after finish P6. Then, the control device 100 controls the lawn mowing work vehicle 10 to move the movement route after finish R14 and to reach the waiting position after finish P6.

The control device 100 may also set the sixth right-turn circle C6_{R} and the sixth left-turn circle C6_{L} contacting each other at the waiting position after finish P6 with respect to the vector V6 in the direction (azimuth angle) of the lawn mowing work vehicle 10 at the waiting position after finish P6 in the aesthetic appearance mode as shown in Fig. 11. In this case, the control device 100 controls the lawn mowing work vehicle 10 to move the movement route after finish R14 created by tangent lines on the fifth right-turn circle C5_{R} or the fifth left-turn circle C5_{L} and the sixth right-turn circle C6_{R} or the sixth left-turn circle C6_{L}, and on the fifth right-turn circle C5_{R} or the fifth left-turn circle C5_{L} and the sixth right-turn circle C6_{R} or sixth left-turn circle C6_{L}.

When there are a plurality of spots where work remains A21 and A22, the control device 100 starts rework by the lawn mowing work vehicle 10 from the spot where work remains A21 on the direct advance route R_{W1} farthest from the waiting position after finish P6 in the direct advance routes R_{W1} having the spots where work remains A21 and A22.

As shown in Fig. 12A and 12B, the control device 100 changes the entering direction to the direct advance route R_{W1} from which the lawn mowing work vehicle 10 enters first according to whether the number of direct advance routes R_{W1} having the spots where work remains A2 is an odd number or an even number in the aesthetic appearance mode.

As shown in Fig. 12A, when the number of direct advance routes R_{W1} having the spots where work remains A2 (A21, A22, A23) is an odd number, the control device 100 creates a route in which the lawn mowing work vehicle 10 enters the direct advance route R_{W1} first from an opposite side to the side where the waiting position after finish P6 is set. The control device 100 controls the lawn mowing work vehicle 10 to enter the direct advance route R_{W1} from the opposite side to the side where the waiting position after finish P6 is set and to perform rework.

As shown in Fig. 12B, when the number of direct advance routes R_{W1} having the spots where work remains A2 (A21, A22, A23) is an even number, the control device 100 creates a route in which the lawn mowing work vehicle 10 enters the direct advance route R_{W1} first from the same side as the side where the waiting position after finish P6 is set. The control device 100 controls the lawn mowing work vehicle 10 to enter the direct advance route R_{W1} from the same side as the side where the waiting position after finish P6 is set and to perform rework.

When the rework route R13 or the movement route after finish R14 is created in the aesthetic appearance mode, the control device 100 may set, for example, a detour circle in which four corners of a rectangular work area A_{W} are vertexes and creates a route passing the detour circle in a case where the route for moving to the rework start point P2 or the movement route after finish R14 enters the work area A_{W}.

Although the work vehicle 10 is the "lawn mowing work vehicle" in the above first embodiment, the invention is not limited to this. For example, the work vehicle 10 may be an "agricultural tractor". When the work vehicle 10 is the agricultural tractor, the work vehicle 10 is provided with a cultivator as the work machine 30 and creates the rework route R1 for performing rework of a spot where cultivation work remains A2 inside the work area A_{W} set in the work field (field) F.

### <Second Embodiment>

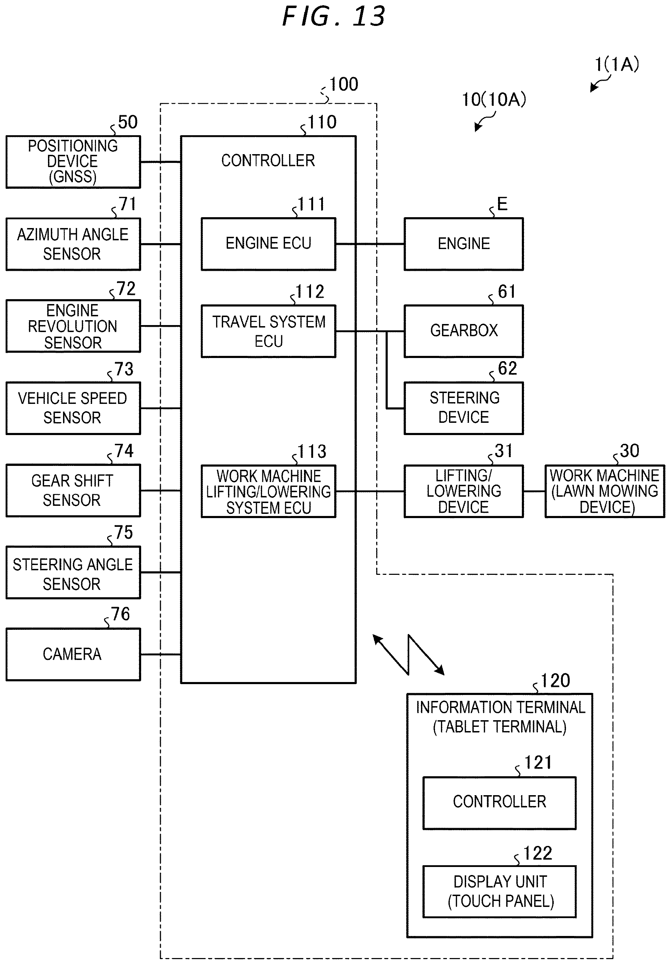

Next, a work management system 1 (1A) for a work vehicle according to a second embodiment will be explained with reference to Figs. 13 to 19. Fig. 13 is a block diagram showing a control configuration of the work management system 1A of the work vehicle according to the second embodiment.

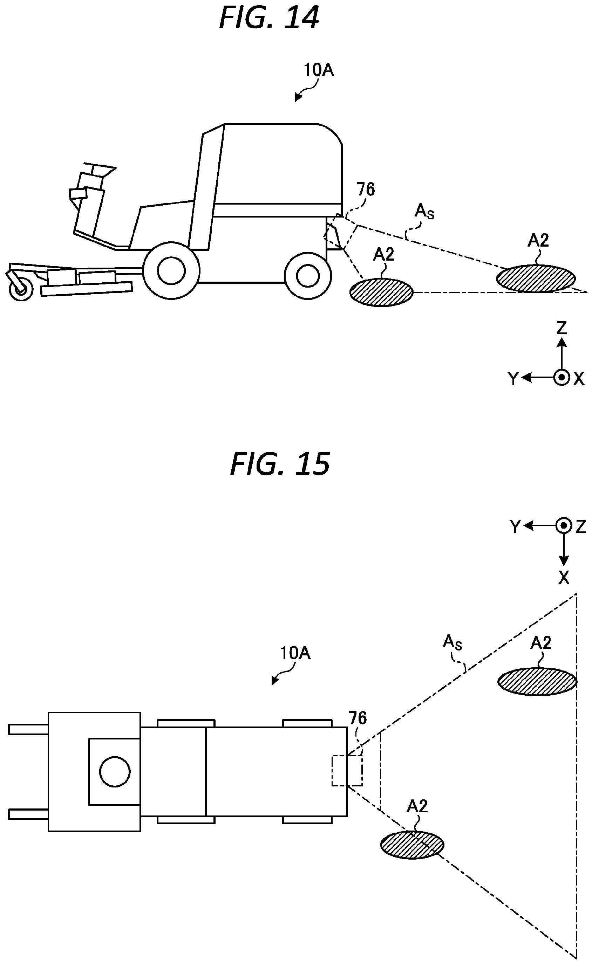

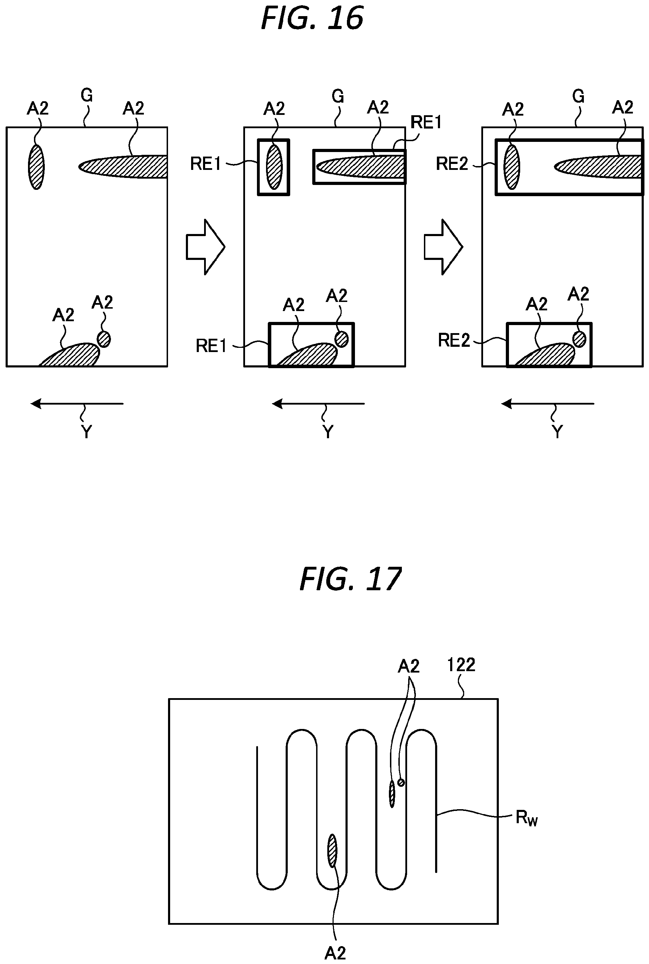

Figs. 14 to 16 are explanatory views for detecting spots where work remains (A2) by using a camera 76. Fig. 14 schematically shows the spot where work remains A2 seen from a side direction, and Fig. 15 schematically shows the spot where work remains A2 seen from above. Fig. 16 shows an image G acquired by the camera 76, showing procedures of processing the image G in the order from the left side in the drawing.

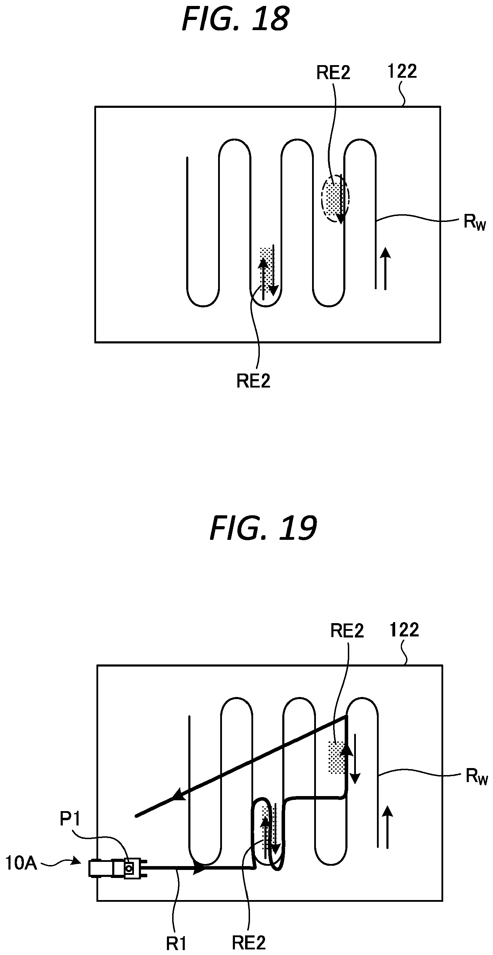

Figs. 17 to 19 are explanatory views for display screens of rework. Figs. 17 to 19 show the work field F displayed on the display unit 122 of the information terminal 120, Figs. 17 and 18 show display examples of the spots where work remains A2 after work is finished along the planned work route R_{W}, and Fig. 19 shows a display example of the rework route R1.

The second embodiment explained below is different from the first embodiment in a point that the camera 76 is provided, and other configurations are the same as those of the first embodiment. The same symbols are given to the same (or equivalent) places as those in the first embodiment and explanation for the places with the same symbols is omitted.

As shown in Fig. 13, the camera 76 that images the rear of a lawn mowing work vehicle 10 (10A) in the work area A_{W} (see Fig. 3) is connected to the control device 100 (controller 110). Video (for example, an image) taken by the camera 76 is displayed on the display unit 122 of the information terminal 120. In a case where the traveling track of the lawn mowing work vehicle 10A is deviated from the planned work route Rw, the control device 100 stores the image taken by the camera 76 in the storage unit (not shown) of at least any of the controller 100 and the information terminal 120.

The control device 100 records the completed work area A1 by the lawn mowing work vehicle 10A on the bases of the traveling track of the lawn mowing work vehicle 10A and a work width of the lawn mowing device 30.

When occurrence of the spot where work remains A2 (see Fig. 3) which is an uncompleted work area with respect to the completed work area A1 is detected, the control device 100 stores the image of the spot where work remains A2 taken by the camera 76 after a predetermined period of time passes from the detection of occurrence of the spot where work remains A2. The control device 100 also stores the image of the spot where work remains A2 taken by the camera 76, when occurrence of the spot where work remains A2 is detected, after the spot where work remains A2 becomes a closed area at an edge part of the work area A_{W} or between adjacent completed work areas A1.

As described above, the spot where work remains A2 can be detected by observation using the camera 76 provided in the lawn mowing work vehicle 10A in the second embodiment. When the spot where work remains A2 is detected by the camera 76, observation by the camera 76 is started from the timing when detecting that the lawn mowing work vehicle 10A is deviated from the planned work route Rw, and the work manager W checks the image to determine whether the image corresponds to the spot where work remains A2 or not.

After the image of the spot where work remains A2 imaged by the camera 76 is stored, the control device 100 transmits a notification signal to the information terminal 120. The information terminal 120, when receiving the notification signal transmitted from the control device 100, makes notification by a notification unit (not shown). It is possible to prompt the work manager W to check the image by making notification by the notification unit as described above. The notification unit may be, for example, a lamp or a buzzer, and may be a screen (notification screen) displayed on the display unit 122.

As shown in Figs. 14 and 15, the camera 76 is provided to face rearward at the rear of the lawn mowing work vehicle 10A for imaging the rear direction of the lawn mowing work vehicle 10A (a detection area As for detecting the spot where work remains A2). The camera 76 is provided to face diagonally downward so that the work manager W can recognize a state (state before or after mowing lawn grass) or color of lawn grass more positively.

A light (not shown) is provided near the camera 76. When the light is turned on according to brightness of the work field F, for example, whether the image corresponds to the spot where work remains A2 or not can be determined even in the twilight.

The camera 76 can change intervals of imaging according to the speed (vehicle speed) of the lawn mowing work vehicle 10A. When the intervals of imaging are changed according to the vehicle speed, the work manager W can obtain images at desired distance intervals such as at every 1-meter interval or at every 5-meter interval.

The control device 100 (see Fig. 13) constantly acquires the self-position P1 and the orientation (absolute azimuth angle) of the lawn mowing work vehicle 10A, and machine body information (for example, whether the vehicle is currently during work or not) while the lawn mowing work vehicle 10A travels, and synchronizes the information with the imaging by the camera 76.

The control device 100 also allows the information terminal 120 to display the spot where work remains A2 together with the already-traveled route so as to refer to the image by being associated with the already-traveled route of the lawn mowing work vehicle 10A. The control device 100 further sets a flag on an image determined to be the spot where work remains A2 or an image of the spot determined to be reworked by the work manager W during traveling or after traveling of the lawn mowing work vehicle 10A. When the flag is selected on the already-traveled route of the lawn mowing work vehicle 10A, the control device 100 allows the information terminal 120 to display the image of that spot.

As shown in Fig. 16, the work manager W writes, for example, a rectangle RE1 on the image G on which the flag is set by regarding the spot where work remains A2 as a square (rectangle) on the display unit 122 of the information terminal 120 (see Fig. 13). When the work manager W writes the rectangle RE1 on the image G as described above, the position and size of the spot where work remains A2 can be given to the control device 100. Moreover, the position and size of the spot where work remains A2 can be estimated by four points of the rectangle RE1 by the control device 100.

The control device 100 also performs processing of integrating points at close distances with respect to a plurality of spots where work remains A2 given by the work manager W by setting a threshold value considering the work width (mowing width) as shown in Fig. 16 (right side). When such processing is performed, the work manager W can easily recognize that the spot where work remains A2 is one spot when the spot where work remains A2 of one spot is displayed over a plurality of images G or when a plurality of spots where work remains A2 closely exist.

The control device 100 also creates a rectangle RE2 having the size into which the spots where work remains A2 fit and in which two sides are parallel to the orientation (absolute azimuth angle) of the lawn mowing work vehicle 10A again, and sets four points of the rectangle RE2 created again as an outline of the spot where work remains A2.

Then, the control device 100 creates the rework route R1 for automatically performing rework of the spots where work remains A2 after work is finished along the planned work route R_{W} by the lawn mowing work vehicle 10A.

When the rework route R1 is created, the control device 100 receives an operation of inputting information for the spot where work remains and an operation of designating the spot where work remains A2 by the work manager W from the display unit 122 (see Fig. 13) in the information terminal 120. The information terminal 120 outputs the inputted information for the spot where work remains and the designated spot where work remains A2 to the control device 100.

The control device 100 creates the rework route R1 on the basis of the information for the spot where work remains and designated spot where work remains A2 from the information terminal 120. The actual work route R1a (see Fig. 4) in which ground work (lawn mowing work) is actually performed in the rework route R1 is set, for example, so as to be longer in the traveling direction of the lawn mowing work vehicle 10A than the spot where work remains A2 in the shortest route mode. In the aesthetic appearance mode, the actual work route R1a is set, for example, as the entire direct advance route R_{W1} having the spot where work remains A2.

The planned work route R_{W}, the spot where work remains A2 (rectangle RE2), and the rework route R1 are displayed so as to be synchronized with one another on the display unit 122 of the information terminal 120.

When rework for the spots where work remains A2 is performed, the planned work route Rw and the spots where work remains A2 are displayed on the display unit 122 as shown in Fig. 17. When the spots where work remains A2 to be reworked are given by the work manager W, the spots where work remains A2 are displayed as the rectangles RE2 as shown in Fig. 18. For example, when the details of the spots where work remains A2 (for example, the rectangle RE2 in an area shown by a dashed dotted line in the drawing) are desired to be checked, an image showing a state before the spot where work remains A2 is displayed by the rectangle RE2 is displayed in an enlarged manner by selecting the rectangle RE2 by the work manager W.

When the spot where work remains A2 to be reworked (rectangle RE2) is determined, the work manager W instructs the lawn mowing work vehicle 10A to perform rework by using the information terminal 120. As the control device 100 acquires the image G (see Fig. 16) taken by the camera 76 (see Figs. 14 and 15) and the self-position P1 (see Fig. 5) of the lawn mowing work vehicle 10A also during the rework, the control device 100 can compare the state with the state before the rework is performed.

As shown in Fig. 19, the rework route R1 from the current self-position P1 to the waiting position after finish P6 (for example, see Fig. 9) of the lawn mowing work vehicle 10A is displayed on the display unit 122.

The rework route R1 may be selected, for example, so as to be parallel to the work direction (lawn mowing direction) around the spot where work remains A2 (rectangle RE2). Information stored by synchronizing the self-position P1 with the orientation during traveling of the lawn mowing work vehicle 10A is used for the lawn mowing direction, and the already-traveled route is also referred to at the same time. The rework route R1 is also created, for example, as a route to be the shortest route except the spots where work remains A2 (rectangles RE2). In the spot where work remains A2 (rectangle RE2), work accuracy such as one-time mowing or 1.5 times reciprocating mowing can be changed.

When the work management system 1 (1A) for the work vehicle according to the second embodiment described above is adopted, in addition to the same advantages as those of the first embodiment, the work manager W can see the video at the rear of the work vehicle 10A by the information terminal; therefore, when the traveling track of the work vehicle 10A is deviated from the planned work route Rw, whether the spot where work remains A2 actually occurs or not can be easily checked by the work manager W by using the information terminal 120. As the occurrence of the spot where work remains A2 can be easily checked by the work manager W as described above, workability can be improved.

Moreover, when the occurrence of the uncompleted work area (area which may include remaining work) A2 which can be the spot where work remains A2 is detected, the work manager W can check whether the spot where work remains A2 occurs or not by observing the entire area A2 which may include remaining work.

The work manager W is informed of the occurrence of the uncompleted work area A2 when detected; therefore, it is possible to prompt the work manager W to immediately check whether the spot where work remains A2 occurs or not.

Although the work vehicle 10A is the "lawn mowing work vehicle" in the above second embodiment, the invention is not limited to this. For example, the work vehicle 10A may be an "agricultural tractor". When the work vehicle 10A is the agricultural tractor, the work vehicle 10A is provided with a cultivator as the work machine 30 and creates the rework route R1 for performing rework of a spot where cultivation work remains A2 inside the work area A_{W} set in the work field (field) F.

The following work management system 1 for the work vehicle is realized by the above-described embodiments.
(1) The work management system 1 for the work vehicle which is provided with the work vehicle 10 having the work machine 30 that performs ground work and performing work by the work machine 30 while traveling, the positioning device 50 measuring the self-position P1 of the work vehicle 10, and the control device 100 controlling the work vehicle 10 to work and travel along the planned work route Rw which is previously set by using a measurement result of the positioning device 50, which includes the information terminal 120 receiving the operation of inputting information of the spot where work remains A2 at which work remains in the place where work is finished and the operation of designating the spot where work remains A2 by the work manager W and outputting the inputted information of the spot where work remains A2 and the designated spot where work remains A2 to the control device 100, in which the control device 100 creates the rework route R1 for performing rework of the spot where work remains A2 after work is finished along the planned work route Rw by the work vehicle 10.

According to the above work management system 1 for the work vehicle, the rework route R1 for performing rework of the spot where work remains A2 is automatically created in the work vehicle 10 that autonomously performs work by autonomous traveling even when remaining work occurs; therefore, rework of the spot where work remains A2 can be easily performed. Accordingly, workability can be improved.

(2) In the work management system 1 for the work vehicle according to the above (1), when creating the rework route R1, the control device 100 has the shortest route mode in which the current position (self-position P1) of the work vehicle 10 and the spot where work remains A2 are connected in the shortest route.

According to the above work management system 1 for the work vehicle, it is effective, for example, when the work in which appearance is not considered to be important such as mowing work at the dry riverbed is performed in a short period of time, in addition to the advantage of the above (1), which can increase work efficiency.

(3) In the work management system 1 for the work vehicle according to the above (2), when there are plural spots where work remains A2 (A21, A22), the control device 100 prompts the work manager W to designate the order of the spots where work remains A21 and A22 to be reworked and the work direction for each of the spots where work remains A21 and A22 in the shortest route mode through the information terminal 120. When the order and the work direction are designated by the work manager W, the control device 100 creates the shortest route on the basis of the designated order and work direction.

According to the above work management system 1 for the work vehicle, a calculation amount for calculating the shortest route by the control device 100 can be reduced by allowing the work manager W to determine the order of the spots where work remains A21 and A22 to be reworked in addition to the advantage of the above (2). Moreover, it is possible to create the shortest route based on the order of the spots where work remains A21 and A22 to be reworked and the work direction for each of the spots where work remains A21 and A22 in accordance with preference of the work manager W; which makes the system user-friendly.

(4) In the work management system 1 for the work vehicle according to the above (3), the control device 100 previously sets the turning radius during movement of the work vehicle 10 in the shortest route, setting the first right-turn circle C1_{R} and the first left-turn circle C1_{L} to be turning tracks used when the work vehicle 10 starts while turning on the basis of the current position (self-position P1) of the work vehicle 10 and the orientation thereof, setting the second right-turn circle C2_{R} and the second left-turn circle C2_{L} to be turning tracks used when the work vehicle 10 enters the rework start point P2 in the spot where work remains A21 at which the work vehicle 10 performs rework first, and including a route to be the shortest, as the shortest route, in routes created by tangent lines L1 on the first right-turn circle C1_{R} or the first left-turn circle C1_{L} and the second right-turn circle C2_{R} or the second left-turn circle C2_{L}, and on the first right-turn circle C1_{R} or the first left-turn circle C1_{L} and the second right-turn circle C2_{R} or second left-turn circle C2_{L}.

According to the above work management system 1 for the work vehicle, a route which can be traced without a roundabout can be created when creating the shortest route in the shortest route mode in addition to the advantage of the above (3).

(5) In the work management system 1 for the work vehicle according to the above (4), when there are plural spots where work remains A2 (A21, A22), the control device 100 sets the third right-turn circle C3_{R} and the third left-turn circle C3_{L} to be turning tracks used when the work vehicle 10 turns from the rework finish point P3 in the spot where work remains A21 at which the work vehicle 10 performs rework first, setting the fourth right-turn circle C4_{R} and the fourth left-turn circle C4_{L} to be turning tracks used when the work vehicle 10 enters the rework start point P4 in the spot where work remains A22 at which the work vehicle 10 performs rework next, and including a route to be the shortest, as the shortest route, in routes created by tangent lines on the third right-turn circle C3_{R} or the third left-turn circle C3_{L} and the fourth right-turn circle C4_{R} or the fourth left-turn circle C4_{L}, and on the third right-turn circle C3_{R} or the third left-turn circle C3_{L} and the fourth right-turn circle C4_{R} or the fourth left-turn circle C4_{L}.

According to the above work management system 1 for the work vehicle, when the shortest route is created in the shortest route mode, a route which can be traced without a roundabout can be created in the rework of the plural spots where work remains A12 and A22 in addition to the advantage of the above (4).

(6) In the work management system 1 for the work vehicle according to any one of the above (1) to (5), the planned work route Rw has a plurality of direct advance routes R_{W1} and a turning route R_{W2} for moving from the direct advance route R_{W1} to the next direct advance routes R_{W1}. The control device 100 further has the aesthetic appearance mode in which the rework route R1 is created so as to be a route through which the vehicle travels for performing work of the designated spots where work remains A2 along the direct advance route R_{W1} and so as not to cross the direct advance route R_{W1} when creating the rework route R1.

According to the above work management system 1 for the work vehicle, it is possible to perform rework of the spots where work remains A2 in places where appearance is also considered to be important (places desired to be beautifully finished) such as lawn mowing at a park or a stadium by including the aesthetic appearance mode in which the route is created so as not to cross the direct advance route R_{W1} in addition to the advantage of any one of the above (1) to (5).

(7) In the work management system 1 for the work vehicle according to the above (6), the control device 100 previously sets the waiting position after finish P6 to which the work vehicle 10 is moved after the rework is finished by the work vehicle 10. When there are plural spots where work remains A2 (A21, A22) in the aesthetic appearance mode, the control device 100 starts rework by the work vehicle 10 from the spot where work remains A2 on the direct advance route R_{W1} farthest from the waiting position after finish P6 in the direct advance routes R_{W1} having the spots where work remains A21 and A22.

According to the above work management system 1 for the work vehicle, the work vehicle 10 can be moved to the waiting position after finish P6 without damaging the work area A_{W} by finishing rework by the work vehicle 10 near the waiting position after finish P6 in the aesthetic appearance mode in addition to the advantage of the above (6).

(8) In the work management system 1 for the work vehicle according to the above (7), when the number of the direct advance routes R_{W1} having spots where work remains A2 is an odd number, the control device 100 creates the route in which the work vehicle 10 enters the direct advance route R_{W1} first from an opposite side to the side where the waiting position after finish P6 is set in the aesthetic appearance mode. When the number of the direct advance routes R_{W1} having the spots where work remains A2 is an even number, the control device 100 creates a route in which the work vehicle 10 enters the direct advance route R_{W1} first from the same side as the side where the waiting position after finish P6 is set in the aesthetic appearance mode.

According to the above work management system 1 for the work vehicle, when the entering direction to the direct advance route R_{W1} in which the work vehicle 10 enters is changed according to whether the number of the direct advance routes R_{W1} having the spots where work remains A2 is an odd number or an even number, rework by the work vehicle 10 can be finished near the waiting position after finish P6, thereby moving the work vehicle 10 to the waiting position after finish P6 without damaging the work area Aw in addition to the advantage of the above (7).

(9) In the work management system 1 for the work vehicle according to the above (8), when creating the rework route R1, the control device 100 has a shortest route mode in which the current position (self-position P1) of the work vehicle 10 and the spot where work remains A2 are connected in the shortest route, setting the turning radius previously during movement of the work vehicle 10 in the shortest route, setting the first right-turn circle C1_{R} and the first left-turn circle C1_{L} to be turning tracks used when the work vehicle 10 starts while turning from the current position (self-position P1) of the work vehicle 10 and the orientation thereof, setting the second right-turn circle C2_{R} and the second left-turn circle C2_{L} to be turning tracks used when the work vehicle 10 enters the rework start point P2 in the spot where work remains A21 at which the work vehicle 10 performs rework first, and including a route to be the shortest, as the shortest route, in routes created by tangent lines L1 on the first right-turn circle C1_{R} or the first left-turn circle C1_{L} and the second right-turn circle C2_{R} or the second left-turn circle C2_{L}, and on the first right-turn circle C1_{R} or the first left-turn circle C1_{L} and the second right-turn circle C2_{R} or second left-turn circle C2_{L}.

According to the above work management system 1 for the work vehicle, the shortest route can be created even in the case of the aesthetic appearance mode in which the route is created so as not to cross the direct advance route R_{W1}, and the route which can be traced without a roundabout can be created at the time of creating the shortest route in addition to the advantage of the above (8). Accordingly, work efficiency can be increased while easily performing rework of the spot where work remains A2 in places where appearance is also considered to be important.

(10) In the work management system 1 for the work vehicle according to the above (9), when there are plural spots where work remains A2 (A21, A22), the control device 100 sets the third right-turn circle C3_{R} and the third left-turn circle C3_{L} to be turning tracks used when the work vehicle 10 turns from an exit end of the direct advance route R_{W1} having the spot where work remains A21 at which the work vehicle 10 performs rework first, setting the fourth right-turn circle C4_{R} and the fourth left-turn circle C4_{L} to be turning tracks used when the work vehicle 10 enters an entry end of the direct advance route R_{W1} having the spot where work remains A22 at which the work vehicle 10 performs rework next, and including a route to be the shortest, as the shortest route, in routes created by tangent lines on the third right-turn circle C3_{R} or the third left-turn circle C3_{L} and the fourth right-turn circle C4_{R} or the fourth left-turn circle C4_{L}, and on the third right-turn circle C3_{R} or the third left-turn circle C3_{L} and the fourth right-turn circle C4_{R} or the fourth left-turn circle C4_{L}.

According to the above work management system 1 for the work vehicle, even in the aesthetic appearance mode in which the route is created so as not to cross the direct advance route R_{W1}, a route which can be traced without a roundabout can be created in rework of the plural spots where work remains A21 and A22 when creating the shortest route in addition to the advantage of the above (9). Accordingly, work efficiency can be increased while easily performing rework of the spot where work remains A2 in places where appearance is also considered to be important.
To provide a work management system for a work vehicle capable of easily performing rework of a spot where work remains even when remaining work occurs to thereby improve workability.

A work management system for a work vehicle according to an embodiment is provided with a work vehicle 10 performing work by a work machine 30 while traveling and a control device 100 controlling the work vehicle 10 to work and travel along a planned work route Rw which is previously set by using a measurement result of a positioning device 50, which includes an information terminal 120 receiving an input of information of a spot where work remains A2 at which work remains in a place where work is finished and outputting the inputted information of the spot where work remains A2 to the control device 100, in which the control device 100 creates a rework route R1 for performing rework of the inputted spot where work remains A2 by the work vehicle 10.

## Claims

1. A work management system for a work vehicle including a work vehicle (10) having a work machine (30) that performs ground work and performing work by the work machine (30) while traveling, a positioning device (50) measuring a self-position (P1) of the work vehicle (10), and a control device (100) controlling the work vehicle (10) to work and travel along a planned work route (Rw) which is previously set by using a measurement result of the positioning device (50), comprising:
an information terminal (120) receiving an input of information of a spot where work remains (A2) at which work remains in a place where work is finished and outputting the inputted information of the spot where work remains (A2) to the control device (100),
wherein the control device (100) creates a rework route (R1) for performing rework of the inputted spot where work remains (A2) by the work vehicle (10).

2. The work management system for the work vehicle according to claim 1,
wherein the control device (100), when there are a plurality of spots where work remains (A2 (A21, A22)), sets the order of the spots where work remains (A21, A22) to be reworked and creates the rework route (R1) on the basis of the set order.

3. The work management system for the work vehicle according to claim 2,
wherein the control device (100) prompts a work manager (W) to set the order of the spots where work remains (A21, A22) to be reworked through the information terminal (120), and creates the rework route (R1) on the basis of the set order when the order is set by the work manager (W).

4. The work management system for the work vehicle according to claim 2,
wherein the control device (100) previously sets a waiting position after finish (P6) to which the work vehicle (10) is moved after rework is finished by the work vehicle (10), and when there are a plurality of spots where work remains (A2 (A21, A22)), creates the rework route (R1) so that the rework is finished near the waiting position after finish (P6).

5. The work management system for the work vehicle according to any one of claims 1 to 4,
wherein the control device (100) previously sets a turning radius during movement of the work vehicle (10), setting right-turn circles (C1_{R}, C3_{R}) and left-turn circles (C1_{L}, C3_{L}) to be turning tracks used when the work vehicle (10) starts while turning from movement start positions (P1, P3) and an orientation thereof, setting right-turn circles (C2_{R}, C4_{R}) and left-turn circles (C2_{L}, C4_{L}) to be turning tracks used when the work vehicle (10) enters rework start point (P2, P4) in any of the movement from a current position (P1) to the first spot where work remains (A21) or the movement from the previous spot where work remains (A21) to the next spot where work remains (A22), and including a route to be the shortest in routes created by tangent lines (L1) on right-turn circles (C1_{R}, C3_{R}) or left-turn circles (C1_{L}, C3_{L}) at the movement start positions (P1, P3) and right-turn circles (C2_{R}, C4_{R}) or left-turn circles (C2_{L}, C4_{L}) at the rework start point (P2, P4), and on right-turn circles (C1_{R}, C3_{R}) or left-turn circles (C1_{L}, C3_{L}) at the movement start positions (P1, P3) and right-turn circles (C2_{R}, C4_{R}) or left-turn circles (C2_{L}, C4_{L}) at the rework start point (P2, P4).

6. The work management system for the work vehicle according to any one of claims 1 to 5,
wherein the planned work route (Rw) includes a plurality of direct advance routes (R_{W1}) and a turning route (R_{W2}) for moving from the direct advance route (R_{W1}) to the next direct advance route (R_{W1}) , and
the control device (100) has an aesthetic appearance mode in which the rework route (R1) is created so as to be a route through which the vehicle travels for performing work of the set spots where work remains (A2) along the direct advance route (R_{W1}) and so as not to cross the direct advance route (R_{W1}) when creating the rework route (R1).
